# DEMANDE DE BREVET EUROPEEN

(11) **EP 2 392 476 A1**
(43) Date de publication de la demande: **07.12.2011**
(21) Numéro de dépôt: 11290226.7
(22) Date de dépôt: 16.05.2011
(51) Int. Cl.: B60B 19/14, B60B 33/08, G09B 9/04, G09B 19/16

(54) **Système de roue folle auto-orientable pour véhicule et véhicule associé**

(30) Priorité: 02.06.2010 FR 1054300
(71) Demandeur: Gabillet, Maurice, F-92100 Boulogne (FR)
(72) Inventeur: Gabillet, Maurice, F-92100 Boulogne (FR)

(57) **Abrégé**

Le système (20) de roue folle auto-orientable pour un véhicule comprend une roue (50), un arbre (52) de rotation de la roue (50) à axe horizontal (B), une platine (54) horizontale et un logement (58) de guidage de la platine (54) dans son plan, la roue (50) étant traversée par l'axe horizontal (B), l'axe horizontal (B) étant fixe par rapport à la platine (54), la platine (54) étant libre de mouvement dans un plan horizontal à l'intérieur du logement (58), le logement (58) présentant une face intérieure supérieure (70), une face intérieure inférieure (72) et une face intérieure périphérique (74), le logement (58) définissant une surface cylindrique de révolution (77) qui limite les mouvements de la platine (54) dans son plan

## Description

La présente invention concerne un système de roue folle auto-orientable pour véhicule.

La plupart des véhicules, en particulier des véhicules automobiles, sont dotés de roues avant motrices commandant l'orientation du véhicule. Ces roues avant sont pilotées par le conducteur du véhicule, en orientation et/ou en vitesse.

Quand les roues avant sont pilotées en orientation, comme c'est le cas par exemple sur la plupart des voitures du commerce, c'est l'orientation des roues qui oriente le véhicule.

Quand les roues avant sont pilotées en vitesse, comme décrit par exemple dans le document FR-A-2 720 984, un différentiel de vitesse est communiqué aux deux roues avant afin de faire tourner le véhicule du côté de la roue ayant la plus faible vitesse relative.

Les roues arrière, qui doivent suivre le mouvement imprimé par les roues avant, sont généralement montées sur un essieu fixe. En virage, elles sont très sollicitées sur leur côté extérieur au virage. Il en résulte une usure prématurée des pneumatiques arrière.

De plus, les roues arrière n'étant pas orientables, le véhicule ne peut pas réaliser de virages avec un rayon de courbure très étroit. La manoeuvrabitité du véhicule s'en trouve donc réduite.

Ainsi, il serait souhaitable d'équiper de tels véhicules de systèmes de roues folles orientables.

On connaît des véhicules dotés de systèmes de roues folles orientables, tels les chariots de supermarché. Les roues des chariots sont reliées au chariot par un roulement à billes autorisant une rotation de la roue à 360° autour d'un axe vertical. Lorsque le chariot est poussé par un utilisateur, les roues du chariot ont ainsi tendance à s'orienter dans la position offrant le moins de résistance au mouvement, c'est-à-dire parallèlement à la trajectoire.

Toutefois, ce système n'offre pas entière satisfaction. En effet, les roues ont tendance à être instables. Elles s'orientent parfois dans une direction incohérente avec la trajectoire.

Un but de l'invention est donc de fournir un système de roue folle pour véhicule s'orientant automatiquement et de façon stable perpendiculairement au rayon de courbure de la trajectoire de la roue et limitant l'effet de la force centrifuge.

A cet effet, l'invention a pour objet un système de roue folle auto-orientable pour véhicule du type précité, caractérisé en ce que le système comprend une roue , un arbre de rotation de la roue à axe horizontal, une platine horizontale et un logement de guidage de la platine dans son plan, la roue étant traversée par l'axe horizontal, l'axe horizontal étant fixe par rapport à la platine, la platine étant libre de mouvement dans un plan horizontal à l'intérieur du logement, le logement présentant une face intérieure supérieure, une face intérieure inférieure et une face intérieure périphérique, le logement définissant une surface cylindrique de révolution qui limite les mouvements de la platine dans son plan.

Le système de roue folle auto-orientable pour véhicule selon l'invention peut comprendre l'une ou plusieurs des caractéristiques suivantes, prise(s) isolément ou selon toute(s) combinaison(s) techniquement possible(s) :
- la surface cylindrique de révolution est la face intérieure périphérique du logement ;
- la surface cylindrique de révolution et/ou une face périphérique solidaire de la platine sont formées d'un matériau frictionnel ;
- les faces intérieures supérieure et inférieure du logement et/ou une face supérieure et une face inférieure de la platine sont formées d'un matériau anti-frottement ;
- la roue présente une surface de roulement ayant une section méridienne verticale bombée.

L'invention a également pour objet un véhicule à traction avant, caractérisé en ce qu'il comprend au moins deux systèmes de roue folle auto-orientable tels que décrits ci-dessus, chaque système de roue auto-orientable étant disposé à l'arrière du véhicule.

Le véhicule selon l'invention peut comprendre l'une ou plusieurs des caractéristiques suivantes, prise(s) isolément ou selon toute(s) combinaison(s) techniquement possible(s) :
- le véhicule comprend des flancs latéraux fixes à double paroi et au moins une porte latérale articulée autour d'un axe horizontal transversal inférieur, la ou chaque porte étant déplaçable entre une position déployée dans laquelle la ou chaque porte obstrue au moins partiellement une ouverture de montée dans le véhicule, et une position rétractée dans laquelle la ou chaque porte est en retrait par rapport à ladite ouverture de montée dans le véhicule, la ou chaque porte étant, en position rétractée, disposée à l'intérieur de la double paroi du flanc latéral associé ;
- le véhicule comprend au moins une porte latérale gauche et au moins une porte latérale droite, lesdites portes latérales droite et gauche étant solidaires l'une de l'autre ;
- le véhicule comprend une portion de toit solidaire des portes latérales ;
- la portion de toit est ouvrable indépendamment des portes latérales ;
- le véhicule est motorisé par un moteur électrique alimenté par au moins un accumulateur électrique et comporte un emplacement d'installation d'un groupe électrogène amovible et des moyens de raccordement du groupe électrogène au ou à chaque accumulateur ;
- le ou chaque accumulateur est localisé sensiblement au centre d'inertie du véhicule.

La présente invention sera mieux comprise à la lecture de la description qui va suivre, donnée uniquement à titre d'exemple, et faite en se référant aux dessins annexés, sur lesquels :
- la Figure 1 est une vue latérale en élévation d'un véhicule selon l'invention, dans une configuration fermée du véhicule ;
- la Figure 2 est une vue semblable à la vue de la Figure 1, dans une configuration ouverte du véhicule ;
- la Figure 3 est une vue en coupe selon un plan marqué III sur la Figure 1 d'une portion du véhicule de la Figure 1 ;
- la Figure 4 est une vue simplifiée, de dessus, du véhicule de la Figure 1
- la Figure 5 est une vue en coupe longitudinale partielle d'un détail marqué V de la Figure 1, représentant un système de roue folle auto-orientable selon l'invention ;
- la Figure 6 est une vue en coupe transversale partielle selon un plan marqué VI sur la Figure 5 du système de roue folle auto-orientable ; et
- la Figure 7 est une vue schématique de dessus du véhicule de la Figure 1, représenté en ligne droite et en entrée de courbe.

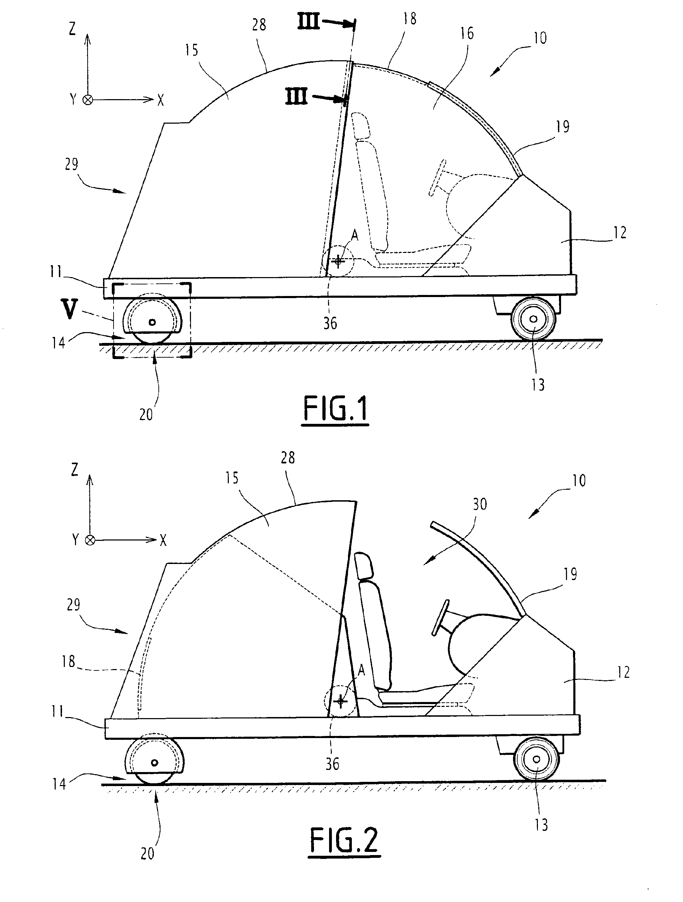

Dans la suite, les termes d'orientation s'entendent par rapport au repère orthogonal usuel des véhicules automobiles, représenté sur les Figures 1 à 6, et dans lequel on distingue :
- un axe longitudinal X, horizontal, s'étendant de l'arrière vers l'avant ;
- un axe transversal Y, horizontal, s'étendant de la droite vers la gauche ; et
- un axe vertical Z s'étendant du bas vers le haut.

Le véhicule selon l'invention 10, représenté sur les Figures 1 à 4, comporte un châssis 11, un compartiment moteur 12, deux roues avant 13, deux roues arrière 14, des flancs latéraux fixes 15, deux portes latérales 16, un toit ouvrant 18 et un pare-brise 19.

Le châssis 11 a la forme générale d'un parallélépipède rectangle. Il s'étend horizontalement sur toute la longueur et toute la largeur du véhicule 10. Il forme le plancher du véhicule 10.

De préférence, le châssis 11 est réalisé en profilés d'aluminium, ou en panneaux en métaux légers, de forme rectangulaire, ou en panneaux en nids d'abeilles. Ces profilés ou panneaux sont avantageusement soudés ou rivetés les uns aux autres.

Le compartiment 12 délimite la face avant du véhicule 10.

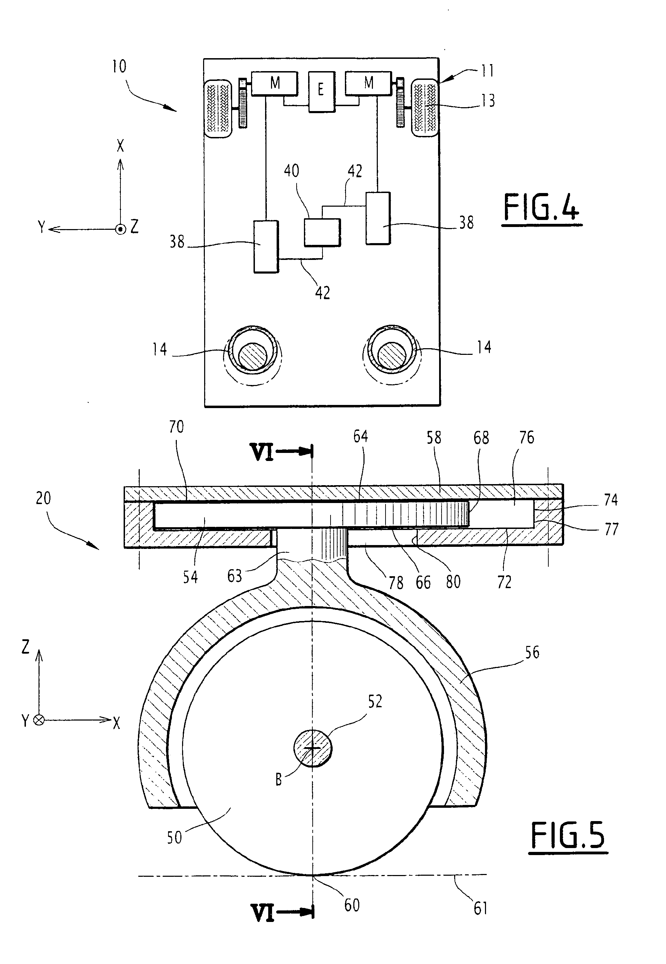

Comme visible sur la Figure 4, le compartiment moteur 12 abrite deux moteurs électriques M de commande des roues avant 13. Il abrite également une électronique E de commande du véhicule 10.

Chaque roue avant 13 est motorisée par un moteur électrique individuel M hébergé dans le compartiment moteur 12. La vitesse de rotation de chaque roue avant 13 est commandée indépendamment de la vitesse de rotation de l'autre roue avant 13. La rotation du véhicule est commandée par le différentiel de vitesse entre les roues avant 13, conformément à ce qui est décrit dans la demande FR-A-2 720 984 du Demandeur.

Chaque roue arrière 14 est équipée d'un système de roue folle auto-orientable 20. Ce système 20 sera décrit plus loin.

Chaque flanc latéral fixe 15 s'étend sensiblement verticalement, parallèlement à la direction longitudinale X.

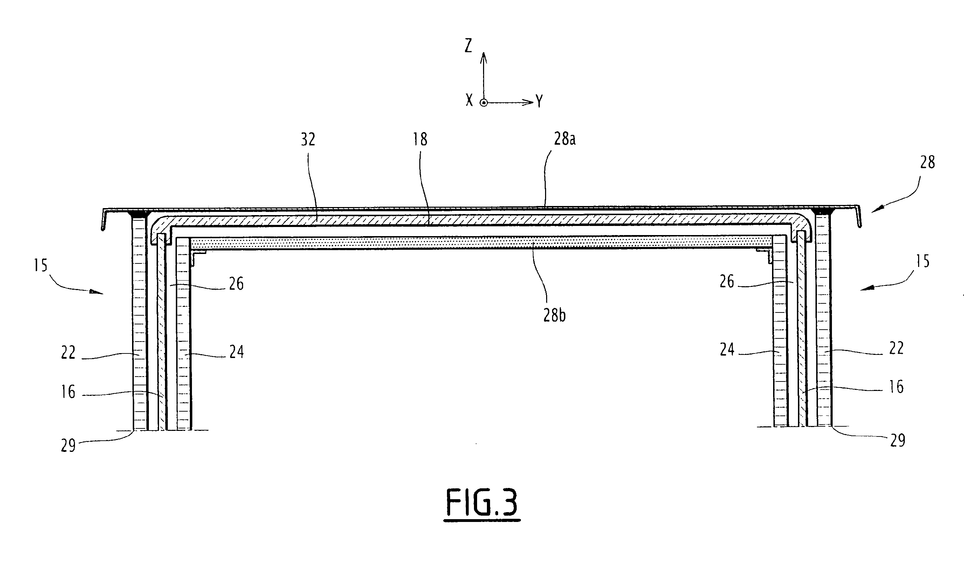

Comme visible sur la Figure 3, chaque flanc latéral fixe 15 comprend une double paroi 22, 24 comprenant une paroi extérieure 22 et une paroi intérieure 24 et délimitant, entre ces parois 22 et 24, un espace vertical 26.

Les flancs latéraux fixes 15 sont raccordés par un toit fixe 28. Le toit fixe 28 est composé d'un toit extérieur 28a reliant les parois extérieures 22 et d'un plafond intérieur 28b reliant les parois intérieures 24.

En variante, le plafond intérieur 28b peut être remplacé par une barre de rigidité reliant les parois intérieures 24.

Chaque porte latérale 16 s'étend sensiblement verticalement, parallèlement à la direction longitudinale X. Chaque porte latérale 16 s'étend le long d'un bord latéral 29 du véhicule 10.

Chaque porte latérale 16 est articulée autour d'un axe horizontal transversal inférieur A. Chaque porte latérale 16 est mobile en rotation autour de l'axe A entre une position fermée, représentée sur la Figure 1, dans laquelle elle obstrue une ouverture 30 de montée dans le véhicule 10, et une position rétractée, représentée sur la Figure 2, dans laquelle elle libère au moins partiellement l'ouverture 30 de montée dans le véhicule 10.

En position rétractée, chaque porte latérale 16 est basculée à l'intérieur de l'espace vertical 26 du flanc latéral 15 associé. Chaque porte latérale 16 est ainsi disposée à l'intérieur de la double paroi 22, 24 de l'un des flancs latéraux 15 et n'empiète pas sur l'espace extérieur.

Comme visible sur la Figure 2, l'ouverture 30 de montée dans le véhicule 10 s'étend le long du bord latéral 29 du véhicule 10. Elle est délimitée par le châssis 11, un des flancs latéraux 15, le compartiment moteur 12 et le pare-brise 19. Elle permet l'accès à l'intérieur du véhicule 10.

Les portes latérales 16 sont solidaires l'une de l'autre.

Une portion de toit cylindrique 32 s'étend entre les portes latérales 16 et entre le toit fixe 28 et le pare-brise 19. La portion de toit 32 est montée coulissante sur les portes latérales 16 et est ouvrable indépendamment des portes latérales 16. Elle forme le toit ouvrant 18.

La portion de toit 32 comporte un dispositif pour la rendre sélectivement solidaire des portes latérales 16. Ce dispositif est par exemple un électroaimant, ou un pion rétractable. Ainsi, lorsque la portion de toit 32 est solidaire des portes latérales 16, l'ouverture des portes latérales 16 entraîne simultanément l'ouverture de la portion de toit 32, ce qui permet de monter dans le véhicule 10 en position debout.

Les portes latérales 16 sont motorisées. Un moteur électrique 36 commande la rotation des portes latérales 16 autour de l'axe A. Les portes latérales 16 sont ouvrables simultanément.

La Figure 4 représente une vue simplifiée de dessus du véhicule 10. Sont notamment représentés le châssis 11 du véhicule 10, des accumulateurs 38 de stockage de l'énergie électrique d'alimentation des moteurs M du véhicule 10, un emplacement 40 d'installation d'un groupe électrogène amovible et des moyens de connexion 42 du groupe électrogène aux accumulateurs 38.

L'emplacement 40 et les accumulateurs 38 sont localisés sensiblement au centre d'inertie du véhicule 10.

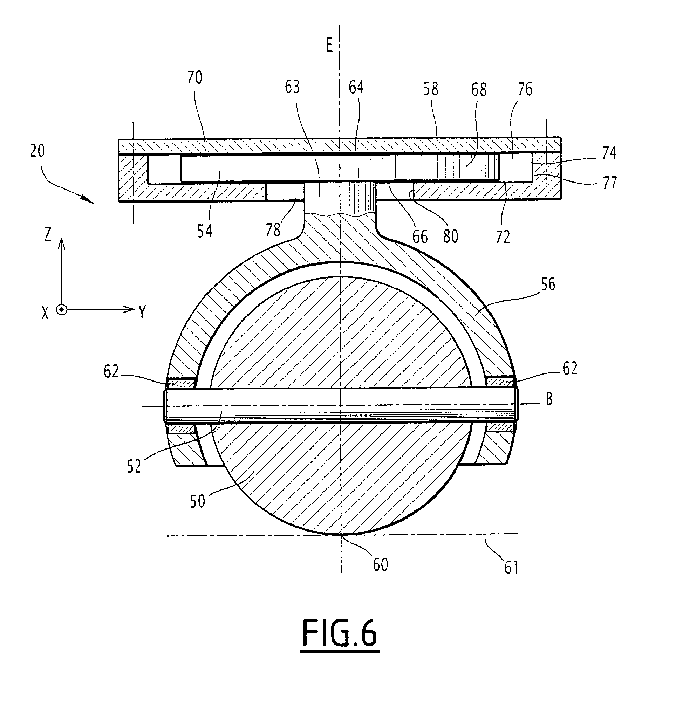

Les Figures 5 et 6 représentent des vues en coupe partielle du système de roue libre auto-orientable 20. Le système de roue libre auto-orientable 20 comprend une roue 50, un arbre horizontal 52 de rotation de la roue 50, une platine circulaire 54 horizontale, un organe de liaison 56 de l'axe horizontal 52 à la platine 54, et un logement 58 de guidage de la platine 56 dans son plan.

La roue 50 présente un axe horizontal de rotation B. Elle est traversée par l'arbre horizontal 52, dont l'axe forme l'axe de rotation B de la roue 50.

Dans une variante préférée de l'invention, la roue 50 est solidaire de l'arbre horizontal 52.

La roue 50 présente une surface de roulement ayant une section méridienne verticale bombée, de façon à limiter la surface de contact 60 entre la roue 50 et le sol 61. Idéalement, cette surface de contact 60 se limite à un point.

La roue 50 est, dans l'exemple représenté, sphérique.

L'axe horizontal B est fixe par rapport à la platine 54. Pour cela, l'arbre horizontal 52 est relié à la platine 54 par l'organe de liaison 56. De préférence, l'arbre horizontal 52 est monté rotatif par rapport à l'organe de liaison 56 par l'intermédiaire d'organes rotatifs 62, par exemple des roulements à bille.

De préférence, l'organe de liaison 56 est une coque sphérique formant un carter de protection de la roue 50 et munie d'une tige verticale 63 en saillie vers le haut.

L'organe de liaison 56 est solidaire de la platine 54 par l'intermédiaire de la tige 63. Il est fixé au centre de la platine 54. Il est par exemple vissé à la platine 54. En variante, il est encastré, collé ou venu de matière avec la platine 54.

La platine 54 est logée dans le logement 58. Elle a la forme d'un disque circulaire.

La platine 54 présence une face supérieure 64, une face inférieure 66 et une face périphérique extérieure 68.

De préférence, la face périphérique extérieure 68 est formée d'un matériau frictionnel à coefficient de frottement élevé. De préférence encore, les faces supérieure 64 et inférieure 66 sont formées d'un matériau anti-frottement à coefficient de frottement faible, tel que du Téflon®.

Le logement 58 est fixé au châssis 11 du véhicule 10. Il présente une face intérieure supérieure 70, une face intérieure inférieure 72 et une face périphérique intérieure 74 délimitant une cavité discoïdale 76.

Le logement 58 délimite une surface cylindrique de révolution 77 qui limite les mouvements de la platine 54 dans son plan. Dans l'exemple représenté, cette surface cylindrique 77 est formée par la face périphérique intérieure 74.

La face intérieure inférieure 72 a une forme annulaire. Elle s'étend autour d'une ouverture traversante 78 de passage avec jeu radial de la tige 63.

Le rayon de la platine 54 est supérieur à la largeur de la face intérieure inférieure 72 annulaire du logement 58, de sorte que la tige 63 ne bute jamais contre le logement 58. De préférence, le rayon de la platine 56 est supérieur au diamètre de l'ouverture traversante 78.

Le rayon de la platine 54 est inférieur au rayon de la cavité discoïdale 76, de sorte que la platine 56 est libre en translation dans un plan horizontal à l'intérieur de la cavité discoïdale 76. Les hauteurs de la cavité 76 et de la platine 54 sont sensiblement égales, de sorte que la platine 54 est bloquée en translation verticale.

De préférence, et afin de permettre un fonctionnement optimisé de l'invention, le rapport du diamètre de la platine 54 au diamètre de la cavité discoïdale 76 est sensiblement égal à 5/7, plus ou moins 5%. Toutefois, ce paramètre devra être ajusté en fonction des dimensions du véhicule 10 et de paramètres tels que l'inertie du véhicule 10.

Dans une variante préférée de l'invention, la surface cylindrique 77 est formée d'un matériau frictionnel à coefficient de frottement élevé. De préférence encore, les faces intérieures supérieure 70 et inférieure 72 du logement 58 sont formées d'un matériau anti-frictionnel à faible coefficient de frottement, tel que du Téflon®.

L'axe passant d'une part par le point de contact 60 entre la roue 50 et le sol 61, et d'autre part par le centre de la platine 54, forme un axe vertical E de pivotement de la roue 50.

En variante, la surface cylindrique 77 est formée par une surface intérieure 80 de l'ouverture traversante 78. Les mouvements de la platine 54 dans son plan sont alors limités par la collaboration entre la surface intérieure 80 de l'ouverture traversante 78 et la tige 63.

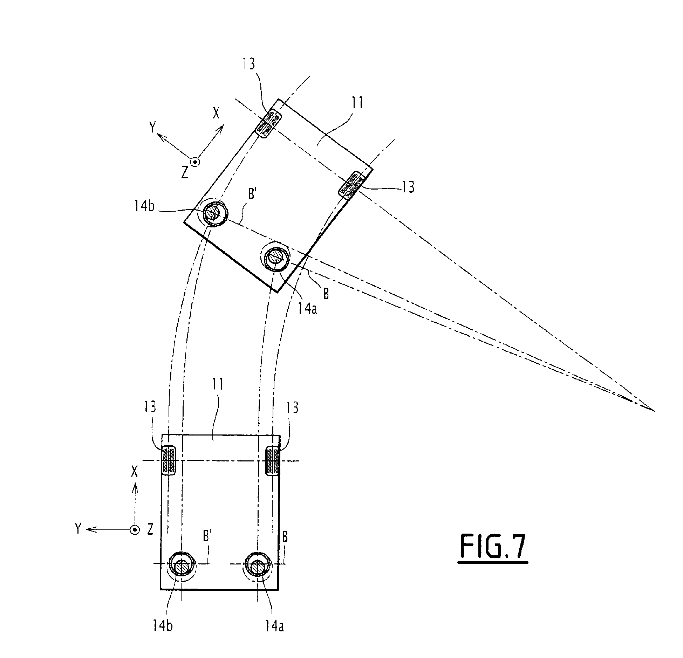

Le fonctionnement du système de roue folle auto-orientable 20 présenté ci-dessus va maintenant être décrit, au regard de la Figure 7.

Le véhicule 10 est représenté en vue de dessus, dans une première position en ligne droite et dans une deuxième position en entrée de courbe. Le châssis 11, les roues avant 13 et les roues arrière droite 14a et gauche 14b sont représentées. Les roues arrière 14a et 14b sont toutes les deux équipées d'un système de roue folle auto-orientable 20. L'axe de rotation de la roue arrière droite 14a est noté B, celui de la roue arrière gauche 14b est noté B'.

En ligne droite, les axes de rotation B, B' des roues arrière 14a et 14b sont orientés perpendiculairement à leurs trajectoires et les platines 54 sont en butée à l'arrière des logements 58.

En entrée de courbe, lorsque le véhicule 10 commence à tourner, le véhicule 10 subit une accélération orientée vers le centre de la courbe. Cette accélération est transmise à chaque platine 54 le long de la surface de contact entre chaque platine 54 et chaque logement 58. Cette accélération est d'autant mieux transmise que la face intérieure périphérique 74 de chaque logement 58 et/ou la face extérieure périphérique 68 de chaque platine 54 sont formées d'un matériau frictionnel.

Chaque platine 54 frottant peu contre les faces intérieures supérieure 70 et inférieure 72 de chaque logement, cette accélération entraîne la rotation de chaque platine 54 et par suite de chaque roue 50 autour de chaque axe vertical E de pivotement de chaque roue 50.

Du fait des frottements entre la face intérieure périphérique 74 de chaque logement 58 et la face périphérique extérieure 68 de chaque platine 54, en tournant autour de l'axe E, chaque platine 54 se déplace à l'intérieur de chaque logement 58, le long de chaque face intérieure périphérique 74.

Chaque roue 50 se positionne ainsi d'elle-même de sorte que l'axe de rotation B, B' de chaque roue arrière 14a, 14b est orienté vers le centre de courbure de la trajectoire de la roue.

Ainsi, grâce à l'invention, chaque roue arrière se positionne automatiquement, et de façon stable, avec son axe parallèle au rayon de courbure de la trajectoire de ladite roue, ce qui permet de limiter l'effet de la force centrifuge.

En outre, le système de portes latérales pivotables facilite l'accès à l'intérieur du véhicule, en particulier pour des personnes à mobilité réduite. Le fait qu'elles se rétractent à l'intérieur de doubles parois fixes permet de limiter leur empiètement sur l'espace public.

De plus, le fait de prévoir un emplacement pour un groupe électrogène amovible permet d'augmenter l'autonomie du véhicule en cas de long trajet.

Enfin, le fait de placer les accumulateurs au centre d'inertie du véhicule permet un bon équilibrage du véhicule, ce qui améliore la tenue de route en virage.

## Revendications

1. Système (20) de roue folle auto-orientable pour un véhicule, **caractérisé en ce que** le système (20) comprend une roue (50), un arbre (52) de rotation de la roue (50) à axe horizontal (B), une platine (54) horizontale et un logement (58) de guidage de la platine (54) dans son plan, la roue (50) étant traversée par l'axe horizontal (B), l'axe horizontal (B) étant fixe par rapport à la platine (54), la platine (54) étant libre de mouvement dans un plan horizontal à l'intérieur du logement (58), le logement (58) présentant une face intérieure supérieure (70), une face intérieure inférieure (72) et une face intérieure périphérique (74), le logement (58) définissant une surface cylindrique de révolution (77) qui limite les mouvements de la platine (54) dans son plan.

2. Système (20) de roue folle auto-orientable selon la revendication 1, **caractérisé en ce que** la surface cylindrique de révolution (77) est la face intérieure périphérique (74) du logement (58).

3. Système (20) de roue folle auto-orientable selon la revendication 1 ou 2, **caractérisé en ce que** la surface cylindrique de révolution (77) et/ou une face périphérique (68) solidaire de la platine (54) sont formées d'un matériau frictionnel.

4. Système (20) de roue folle auto-orientable selon l'une quelconque des revendications précédentes, **caractérisé en ce que** les faces intérieures supérieure (70) et inférieure (72) du logement (58) et/ou une face supérieure (64) et une face inférieure (66) de la platine (54) sont formées d'un matériau anti-frottement.

5. Système (20) de roue folle auto-orientable selon l'une quelconque des revendications précédentes, **caractérisé en ce que** la roue (50) présente une surface de roulement ayant une section méridienne verticale bombée.

6. Véhicule (10) à traction avant, **caractérisé en ce qu'**il comprend au moins deux systèmes (20) de roue folle auto-orientable selon l'une quelconque des revendications précédentes, chaque système (20) de roue auto-orientable étant disposé à l'arrière du véhicule.

7. Véhicule (10) selon la revendication 6, **caractérisé en ce qu'**il comprend des flancs latéraux fixes (15) à double paroi (22, 24) et au moins une porte latérale (16) articulée autour d'un axe horizontal transversal inférieur (A), la ou chaque porte (16) étant déplaçable entre une position déployée dans laquelle la ou chaque porte (16) obstrue au moins partiellement une ouverture (30) de montée dans le véhicule (10), et une position rétractée dans laquelle la ou chaque porte (16) est en retrait par rapport à ladite ouverture (30) de montée dans le véhicule (10), la ou chaque porte (16) étant, en position rétractée, disposée à l'intérieur de la double paroi (22, 24) du flanc latéral (15) associé.

8. Véhicule (10) selon la revendication 7, **caractérisé en ce qu'**il comprend au moins une porte latérale gauche (16) et au moins une porte latérale droite (16), lesdites portes latérales droite et gauche (16) étant solidaires l'une de l'autre.

9. Véhicule (10) selon la revendication 8, **caractérisé en ce qu'**il comprend une portion de toit (32) solidaire des portes latérales (16).

10. Véhicule selon la revendication 9, **caractérisé en ce que** la portion de toit (32) est ouvrable indépendamment des portes latérales (16).

11. Véhicule (10) selon l'une quelconque des revendications 6 à 10, **caractérisé en ce qu'**il est motorisé par un moteur électrique alimenté par au moins un accumulateur électrique (38) et comporte un emplacement (40) d'installation d'un groupe électrogène amovible et des moyens de raccordement (42) du groupe électrogène au ou à chaque accumulateur (38).

12. Véhicule (10) selon la revendication 11, **caractérisé en ce que** le ou chaque accumulateur (38) est localisé sensiblement au centre d'inertie du véhicule (10).
